(19) Europäisches Patentamt
European Patent Office
Office européen des brevets

(11) **EP 4 604 541 A1**

(12) **EUROPEAN PATENT APPLICATION**
published in accordance with Art. 153(4) EPC

(43) Date of publication:
**20.08.2025  Bulletin 2025/34**

(21) Application number: 23877707.2

(22) Date of filing: 12.10.2023

(51) International Patent Classification (IPC):
*H04N 19/60* (2014.01)      *H04N 19/18* (2014.01)
*H04N 19/70* (2014.01)      *H04N 19/176* (2014.01)
*H04N 19/124* (2014.01)      *H04N 19/157* (2014.01)

(52) Cooperative Patent Classification (CPC):
**H04N 19/124; H04N 19/157; H04N 19/176;
H04N 19/18; H04N 19/60; H04N 19/70**

(86) International application number:
**PCT/KR2023/015738**

(87) International publication number:
**WO 2024/080784 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 12.10.2022  US 202263415632 P

(71) Applicant: **LG Electronics Inc.**
**Yeongdeungpo-gu**
**Seoul 07336 (KR)**

(72) Inventors:
• LIM, Jaehyun
  Seoul 06772 (KR)
• CHOI, Jungah
  Seoul 06772 (KR)
• ZHAO, Jie
  Seoul 06772 (KR)
• KIM, Seung Hwan
  Seoul 06772 (KR)

(74) Representative: **Maikowski & Ninnemann
Patentanwälte Partnerschaft mbB
Postfach 15 09 20
10671 Berlin (DE)**

(54) **VIDEO ENCODING/DECODING METHOD AND DEVICE BASED ON NON-SEPARABLE FIRST-ORDER TRANSFORMATION, AND RECORDING MEDIUM FOR STORING BITSTREAM**

(57)    A video encoding/decoding method and device are provided. The video decoding method according to the present disclosure may comprise the steps of: obtaining transform information including information about a non-separable first-order transformation; obtaining a transform coefficient for a current block; and generating a residual block by inversely transforming the transform coefficient on the basis of the transform information.

FIG. 5

## Description

[Technical Field]

The present disclosure relates to an image encoding/decoding method and device and a recording medium for storing a bitstream, and more specifically, relates to an image encoding/decoding method and device based on a post-decoding filter, and a recording medium for storing a bitstream generated by an image encoding method/device of the present disclosure.

[Background Art]

Recently, the demand for high-resolution and high-quality images, such as High Definition (HD) images and Ultra High Definition (UHD) images, has been increasing in various fields. As image data becomes high-resolution and high-quality, the amount of transmitted information or bit rate increases relative to conventional image data. The increase in transmitted information or bit rate amount leads to an increase in transmission costs and storage costs.

Accordingly, a high-efficiency image compression technology is required to effectively transmit, store, and reproduce the information of high-resolution and high-quality images.

[Disclosure]

[Technical Problem]

The present disclosure is to provide an image encoding/decoding method and apparatus with improved encoding/decoding efficiency.

In addition, the present disclosure is to provide an image encoding/decoding method and device for performing an intra prediction mode.

In addition, the present disclosure is to provide an image encoding/decoding method and device for performing an inter prediction mode.

In addition, the present disclosure is to provide an image encoding/decoding method and device based on non-separable primary transform.

In addition, the present disclosure is to provide a non-transitory computer-readable recording medium for storing a bitstream generated by the image encoding method or device according to the present disclosure.

In addition, the present disclosure is to provide a non-transitory computer-readable recording medium for storing a bitstream which is received and decoded by the image decoding apparatus according to the present disclosure and used for image reconstruction.

In addition, the present disclosure is to provide a method for transmitting a bitstream which is generated by the image encoding method or device according to the present disclosure.

The technical problems to be achieved in the present disclosure are not limited to the technical problems described above, and other technical problems not described may be clearly understood by those of ordinary skill in the art from the following descriptions.

[Technical Solution]

According to an embodiment of the present disclosure, in an image decoding method performed by an image decoding apparatus, the image decoding method may include obtaining transform information including information on non-separable primary transform, obtaining a transform coefficient for a current block and generating a residual block by inverse-transforming the transform coefficient based on the transform information.

According to an embodiment of the present disclosure, the transform information may include a non-separable primary transform activation flag indicating whether non-separable primary transform is available for the current block, and based on a value of the non-separable primary transform activation flag being a first value, may represent that separable primary transform is available for the current block, and based on a value of the non-separable primary transform activation flag being a second value, may represent that one of non-separable primary transform or separable primary transform is available for the current block.

According to an embodiment of the present disclosure, based on at least one of a shape of the current block or a size of the current block, the transform information may include a non-separable primary transform application flag indicating whether non-separable primary transform is applied to the current block.

According to an embodiment of the present disclosure, the transform information may include a kernel index indicating one of a plurality of transform kernels, and the plurality of transform kernels may include at least one non-separable transform kernel and at least one separable transform kernel.

According to an embodiment of the present disclosure, the transform information may include a non-separable primary transform application flag indicating whether non-separable primary transform is applied to the current block, and a non-separable transform kernel index indicating one of a plurality of non-separable transform kernels may be obtained based on the non-separable primary transform application flag indicating that non-separable primary transform is applied to the current block, and a separable transform kernel index indicating one of a plurality of separable transform kernels may be obtained based on the non-separable primary transform application flag indicating that non-separable primary transform is not applied to the current block.

According to an embodiment of the present disclosure, the number of the non-separable transform kernels or the separable transform kernels may be obtained based on at least one of whether intra prediction is applied to the current block, an intra prediction mode, a block size, a neighboring sample value, whether to use secondary transform or a quantization parameter.

According to an embodiment of the present disclosure, based on non-separable primary transform being applied to the current block, secondary transform for the current block may be restricted to not being non-separable transform.

According to an embodiment of the present disclosure, information on the non-separable primary transform may be parsed before information on non-separable secondary transform for the current block, and based on non-separable primary transform being applied to the current block, parsing of information on the non-separable secondary transform may be skipped.

According to an embodiment of the present disclosure, based on non-separable secondary transform being applied to the current block, primary transform for the current block may be restricted to not being non-separable transform.

According to an embodiment of the present disclosure, information on non-separable secondary transform for the current block may be parsed before information on the non-separable primary transform, and based on non-separable secondary transform being applied to the current block, parsing of information on the non-separable secondary transform may be skipped.

According to an embodiment of the present disclosure, information on the non-separable primary transform may be encoded based on the characteristics of a residual coefficient.

According to an embodiment of the present disclosure, in an image encoding method performed by an image encoding apparatus, the image encoding method may include obtaining a residual block for a current block, encoding transform information including information on non-separable primary transform and generating a transform coefficient by transforming the residual block based on the transform information.

According to an embodiment of the present disclosure, it may be a computer-readable recording medium storing a bitstream generated by an image encoding method.

According to an embodiment of the present disclosure, in a method for transmitting a bitstream generated by an image encoding method, the image encoding method may include obtaining a residual block for a current block, encoding transform information including information on non-separable primary transform and generating a transform coefficient by transforming the residual block based on the transform information.

[Advantageous Effects]

According to the present disclosure, an image encoding/decoding method and apparatus with improved encoding/decoding efficiency may be provided.

In addition, according to the present disclosure, an image encoding/decoding method and device performing an intra prediction mode may be provided.

In addition, according to the present disclosure, an image encoding/decoding method and device performing an inter prediction mode may be provided.

In addition, according to the present disclosure, an image encoding/decoding method and device based on non-separable primary transform may be provided.

In addition, according to the present disclosure, a non-transitory computer-readable recording medium for storing a bitstream generated by the image encoding method or device according to the present disclosure may be provided.

According to the present disclosure, a non-transitory computer-readable recording medium for storing a bitstream which is received and decoded by the image decoding apparatus according to the present disclosure and used for image reconstruction may be provided.

In addition, according to the present disclosure, a method for transmitting a bitstream generated by the image encoding method or device according to the present disclosure may be provided.

The effects obtainable from the present disclosure are not limited to the effects described above, and other effects not described may be clearly understood by those of ordinary skill in the art from the following descriptions.

[Description of Drawings]

FIG. 1 shows a schematic diagram of a video coding system to which an embodiment according to the present disclosure may be applied.

FIG. 2 shows a schematic diagram of an image encoding apparatus to which an embodiment according to the present disclosure may be applied.

FIG. 3 shows a schematic diagram of an image decoding apparatus to which an embodiment according to the present disclosure may be applied.

FIG. 4 is a flowchart of an image encoding method according to the present disclosure.

FIG. 5 is a flowchart of an image decoding method according to the present disclosure.

FIG. 6 is a diagram illustratively showing a content streaming system to which an embodiment of the present disclosure may be applied.

[Mode for Invention]

Hereinafter, embodiments of the present disclosure will be described in detail by referring to the attached drawings for those of ordinary skill in the art to easily implement them. However, the present disclosure may be implemented in various different forms and is not limited to the embodiments described herein.

In describing embodiments of the present disclosure, detailed explanations of well-known configurations or functions are omitted when they are deemed to obscure the main point of the present disclosure. Additionally, parts irrelevant to the description of the present disclosure are omitted from the drawings, and similar reference numerals have been assigned to similar parts.

In the present disclosure, when a certain component is described as being "connected," "coupled," or "linked" to another component, this may include not only a direct connection but also an indirect connection where another component may exist in the middle. Additionally, when a certain component is described as "including" or "having" another component, this means that, unless explicitly stated otherwise, it does not exclude other components but may further include additional components.

In the present disclosure, the terms first, second, etc. are used solely for the purpose of distinguishing one component from another and do not limit the order or importance of the components unless explicitly stated otherwise. Accordingly, a first component in one embodiment may be referred to as a second component in another embodiment, and similarly, a second component in one embodiment may be referred to as a first component in another embodiment within the range of the present disclosure.

In the present disclosure, distinguishable components are described to clearly explain their respective characteristics and do not necessarily mean that the components are separate. In other words, a plurality of components may be integrated into a single hardware or software unit, or a single component may be distributed across multiple hardware or software units. Accordingly, without explicitly describing them, such integrated or distributed embodiments are also included in the range of the present disclosure.

In the present disclosure, the components described in various embodiments do not necessarily mean essential components, and some may be optional components. Accordingly, embodiments composed of a subset of the components described in one embodiment are also included in the range of the present disclosure. Additionally, embodiments that include additional components beyond those described in various embodiments are also included in the range of the present disclosure.

The present disclosure relates to the encoding and decoding of images, and the terms used herein may have the ordinary meanings commonly used in the field of technology to which this disclosure belongs unless the terms are newly defined in the present disclosure.

In the present disclosure, "video" may refer to a set of images in sequence over time.

In the present disclosure, "picture" generally refers to a unit representing a single image at a specific point in time. A slice/tile is an encoding unit that constitutes a part of a picture, and a picture may be composed of one or more slices/tiles. Additionally, a slice/tile may include one or more coding tree units (CTUs).

In the present disclosure, "pixel" or "pel" may refer to the smallest unit that constitutes one picture (or image). Additionally, the term "sample" may be used as a corresponding term for a pixel. A sample may generally represent a pixel or the value of a pixel and may indicate only the pixel/pixel value of a luma component or only the pixel/pixel value of a chroma component.

In the present disclosure, "unit" may refer to a basic unit of image processing. A unit may include at least one of a specific area of a picture or information related to the area. Depending on the context, the term "unit" may be used interchangeably with "sample array," "block," "area," etc. In general, an $M \times N$ block may include a set (or array) of samples (or a sample array) or a set (or array) of transform coefficients, consisting of M columns and N rows.

In the present disclosure, the term "current block" may refer to one of "current coding block", "current coding unit", "encoding target block", "decoding target block", or "processing target block". When prediction is performed, "current block" may refer to "current prediction block" or "prediction target block". When transform (inverse transform)/quantization (dequantization) is performed, "current block" may refer to "current transform block" or "transform target block". When filtering is performed, "current block" may refer to "filtering target block".

In the present disclosure, unless explicitly stated as a chroma block, the term "current block" may refer to a block that includes both a luma component block and a chroma component block or may refer to "the luma block of the current block". The luma component block of the current block may be explicitly expressed with terms such as "luma block" or "current luma block", clearly indicating it as a luma component block. Additionally, the chroma component block of the current block may be explicitly expressed with terms such as "chroma block" or "current chroma block", clearly indicating it as a chroma component block.

In the present disclosure, "/" and "," may refer to "and/or". For example, "A/B" and "A, B" may refer to "A and/or B". Additionally, "A/B/C" and "A, B, C" may refer to "at least one of A, B, and/or C".

In the present disclosure, "or" may refer to "and/or". For example, "A or B" may mean 1) "A" only, 2) "B" only, or 3) "A and B." Alternatively, in the present disclosure, "or" may also mean "additionally or alternatively".

In the present disclosure, "at least one of A, B, and C" may refer to "only A", "only B", "only C", or "any combination of A, B, and C". Additionally, "at least one of A, B, or C" or "at least one of A, B and/or C" may refer to "at least one of A, B, and C".

The parentheses used in the present disclosure may refer to "for example". For example, when described as "prediction (intra prediction)", "intra prediction" may be proposed as an example of "prediction". In other words, the "prediction" in the present disclosure is not limited to "intra prediction," and "intra prediction" may be proposed as an example of "prediction". Additionally, when described as "prediction (i.e., intra prediction)", "intra prediction" may also be proposed as an example of "prediction".

## Overview of the video coding system

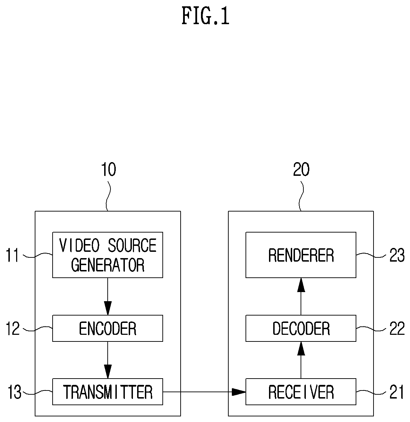

FIG. 1 shows a schematic diagram of a video coding system to which an embodiment according to the present disclosure may be applied.

A video coding system according to an embodiment may include an encoder apparatus 10 and a decoder apparatus 20. The encoder apparatus 10 may transmit encoded video and/or image information or data to the decoder apparatus 20 through a digital storage medium or network in the form of a file or streaming.

An encoder apparatus 10 according to an embodiment may include a video source generator 11, an encoder 12, and a transmitter 13. A decoder apparatus 20 according to an embodiment may include a receiver 21, a decoder 22, and a renderer 23. The encoder 12 may be referred to as a video/image encoder, and the decoder 22 may be referred to as a video/image decoder. The transmitter 13 may be included in the encoder 12. The receiver 21 may be included in the decoder 22. The renderer 23 may include a display, and the display may be configured as a separate device or external component.

The video source generator 11 may obtain a video/an image through a process of capturing, synthesizing, or generating a video/an image. The video source generator 11 may include a video/an image capture device and/or a video/an image generation device. The video/image capture device may include, for example, one or more cameras, a video/an image archive containing previously captured video/image, etc. The video/image generation device includes, for example, a computer, tablet, or smartphone, and may (electronically) generate a video/an image. For example, virtual video/image may be generated through a computer, etc., and in this case, the video/image capturing process may be replaced by the process of generating related data.

The encoder 12 may encode the input video/image. The encoder 12 may perform a series of procedures such as prediction, transform, quantization, etc. for compression and encoding efficiency. The encoder 12 may output the encoded data (encoded video/image information) in the form of a bitstream.

The transmitter 13 may obtain the encoded video/image information or data output in the form of a bitstream and transmit it to the receiver 21 of the decoder apparatus 20 or another external object through a digital storage medium or network, in the form of a file or streaming. The digital storage medium may include various storage media such as USB, SD, CD, DVD, Blu-ray, HDD, SSD, etc. The transmitter 13 may include an element for generating media files through a predetermined file format and element for transmission over broadcast/communication networks. The transmitter 13 may be provided as a separate transmission apparatus from the encoder 120, in which case the transmission apparatus may include at least one processor for obtaining the encoded video/image information or data in bitstream form and a transmitter for delivering it in the form of file or streaming. This receiver 21 may extract/receive the bitstream from the storage medium or network and transmit it to decoder 22.

The decoder 22 may decode the video/image by performing a series of procedures such as dequantization, inverse transform, prediction, etc. corresponding to the operations of the encoder 12.

The renderer 23 may render the decoded video/image. The rendered video/image may be displayed through the display unit.

## Overview of the image encoding apparatus

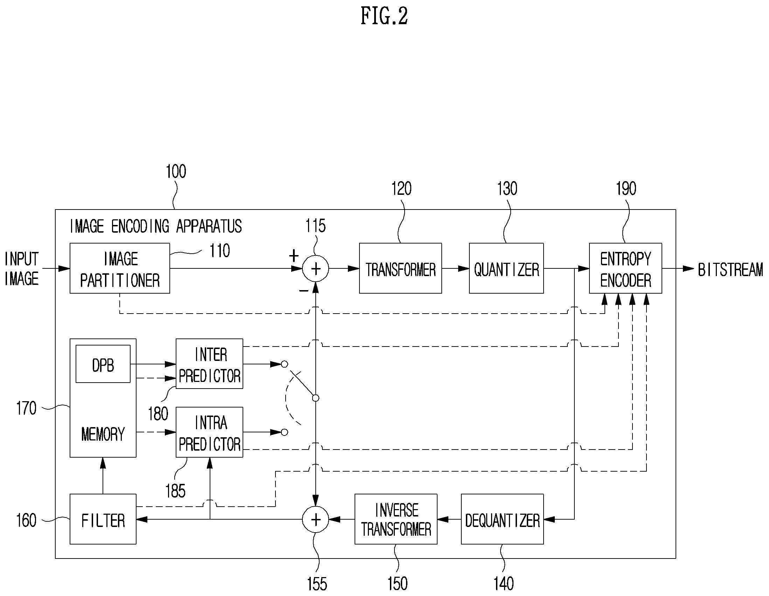

FIG. 2 shows a schematic diagram of an image encoding apparatus to which an embodiment according to the present disclosure may be applied.

As described in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter predictor 180, an intra predictor 185, and an entropy encoder 190. The inter predictor 180 and the intra predictor 185 may collectively be referred to as a "predictor." The transformer 120, the quantizer 130, the dequantizer 140, and the inverse transformer 150 may be included in a residual processor. The residual processor may further include the subtractor 115.

All or at least some of the multiple components constituting the image encoding apparatus 100 may be implemented as a single hardware component (i.e., an image encoding apparatus 100 or a processor), depending on the embodiment. Additionally, the memory 170 may include a decoded picture buffer (DPB) and may be implemented by a digital storage medium.

The image partitioner 110 may partition the input image (or picture, frame) input to the image encoding apparatus 100 into at least one processing unit. As an example, the processing unit may be referred to as a coding unit (CU). A coding unit may be obtained by recursively partitioning a coding tree unit (CTU) or a largest coding unit (LCU) according to a quad-tree, binary-tree, or ternary-tree (QT/BT/TT) structure. For example, a coding unit may be divided into a deeper-depth coding unit based on a quad-tree structure, a binary-tree structure, and/or a ternary-tree structure. For partitioning a coding unit, the quad-tree structure may be applied first, followed by the binary-tree structure and/or the ternary-tree structure. The coding procedure according to the present disclosure may be performed based on the final coding unit, which is not further partitioned. The largest coding unit may be used directly as the final coding unit, or a deeper-depth coding unit obtained by partitioning the largest coding unit may be used as the final coding unit. Here, the coding procedure may include a procedure such as prediction, transform, and/or reconstruction, which will be described later. As another example, the processing unit for the coding procedure may be a prediction unit (PU) or a transform unit (TU). The prediction unit and the transform unit may each be divided or partitioned from the final coding unit. The prediction unit may be a unit for sample prediction, and the transform unit may be a unit for deriving a transform coefficient and/or deriving a residual signal from a transform coefficient.

The predictor (inter predictor 180 or intra predictor 185) may perform prediction for a target block (current block) and generate a predicted block that includes prediction samples for the current block. The predictor may determine whether intra prediction or inter prediction is applied to the current block or coding unit (CU). The predictor may generate various information related to the prediction of the current block and transmit it to the entropy encoder 190. The prediction-related information may be encoded by the entropy encoder 190 and may be output in the form of a bitstream.

The intra predictor 185 may predict the current block by referring to samples within the current picture. The referenced samples may be located in the neighboring area of the current block or may be located farther away, depending on the intra prediction mode and/or intra prediction method. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes, depending on the granularity of the prediction direction. However, this is an example, and a greater or fewer number of directional prediction modes may be used depending on the configuration. The intra predictor 185 may also determine the prediction mode applied to the current block by using the prediction mode applied to neighboring block.

The inter predictor 180 may derive a predicted block for the current block based on a reference block (reference sample array) specified by a motion vector on a reference picture. To reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on the inter prediction direction (i.e. L0 prediction, L1 prediction, Bi prediction, etc.). In inter prediction, neighboring block may include spatial neighboring block present within the current picture and temporal neighboring block present in the reference picture. The reference picture containing the reference block and the reference picture containing the temporal neighboring block may be the same or different. The temporal neighboring block may be referred to as a collocated reference block or a collocated coding unit (colCU). The reference picture containing the temporal neighboring block may be referred to as a collocated picture (colPic). For example, the inter predictor 180 may construct a motion information candidate list based on neighboring blocks and generate information indicating which candidate is used to derive the motion vector and/or reference picture index of the current block. Inter prediction may be performed based on various prediction modes, and for example, in the skip mode and merge mode, the inter predictor 180 may use the motion information of neighboring block as the motion information of the current block. In skip mode, unlike merge mode, residual signal may not be transmitted. In the motion vector prediction (MVP) mode, the motion vector of a neighboring block may be used as a motion vector predictor, and the motion vector of the current block may be signaled by encoding the motion vector difference and an indicator for the motion vector predictor. The motion vector difference may refer to the difference between the motion vector of the current block and the motion vector predictor.

The predictor may generate a prediction signal based on various prediction methods and/or prediction techniques described later. For example, the predictor may apply intra prediction or inter prediction for the prediction of the current block, and it may also apply both intra prediction and inter prediction simultaneously. The prediction method that applies intra prediction and inter prediction simultaneously for the prediction of the current block may be referred to as combined inter and intra prediction (CIIP). Additionally, the predictor may perform intra block copy (IBC) for the prediction of the current block. Intra block copy may be used, for example, for screen content coding (SCC), etc. in applications such as game content image/video coding. IBC is a method of predicting the current block by using a pre-reconstructed reference block within the current picture, located at a predetermined distance from the current block. When IBC is applied, the position of the reference block within the current picture may be encoded as a vector (block vector) corresponding to the predetermined distance. IBC basically performs prediction within the current picture, but since it derives a reference block within the current picture, it may operate similarly to inter prediction. In other words, IBC may use at least one of the inter prediction methods described in the present disclosure.

The prediction signal generated by the predictor may be used to generate a reconstructed signal or to generate a residual signal. The subtractor 115 may generate a residual signal (residual block, residual sample array) by subtracting the prediction signal (predicted block, predicted sample array) output from the predictor from the input image signal (original block, original sample array). The generated residual signal may be transmitted to the transformer 120.

The transformer 120 may generate transform coefficients by applying a transform method to the residual signal. For example, the transform method may include at least one of Discrete Cosine Transform (DCT), Discrete Sine Transform (DST), Karhunen-Loeve Transform (KLT), Graph-Based Transform (GBT), or Conditionally Non-linear Transform (CNT). Here, GBT refers to a transform obtained from a graph when the relationship information between pixels is represented as a graph. CNT refers to a transform obtained based on a prediction signal generated by using all previously reconstructed pixels. The transform process may be applied to a pixel block of the same square size or to a non-square variable-sized block.

The quantizer 130 may quantize the transform coefficients and transmit them to the entropy encoder 190. The entropy encoder 190 may encode the quantized signal (information on the quantized transform coefficients) and output it as a bitstream. The information on the quantized transform coefficients may be referred to as residual information. The quantizer 130 may rearrange the block-shaped quantized transform coefficients into a one-dimensional vector based on a coefficient scan order and may generate the information on the quantized transform coefficients based on the one-dimensional vector of quantized transform coefficients.

The entropy encoder 190 may perform various encoding methods, such as exponential Golomb, context-adaptive variable length coding (CAVLC), or context-adaptive binary arithmetic coding (CABAC). The entropy encoder 190 may encode not only the quantized transform coefficients but also information necessary for video/image reconstruction (i.e., values of syntax elements) either together or separately with the quantized transform coefficients. The encoded information (i.e., encoded video/image information) may be transmitted or stored in the form of a bitstream in network abstraction layer (NAL) unit. The video/image information may further include information on various parameter sets, such as an adaptation parameter set (APS), a picture parameter set (PPS), a sequence parameter set (SPS), or a video parameter set (VPS). Additionally, the video/image information may further include general constraint information. The signaling information, transmitted information, and/or syntax elements described in the present disclosure may be included in the bitstream by being encoded through the above-described encoding process.

The bitstream may be transmitted through a network or stored in a digital storage medium. Here, the network may include a broadcast network and/or a communication network, etc., and the digital storage medium may include various storage media such as USB, SD, CD, DVD, Blu-ray, HDD, SSD, etc. A transmitter (not shown) for transmitting the signal output from the entropy encoder 190 and/or a storage unit (not shown) for storing the signal may be provided as an internal/external element of the image encoding apparatus 100, or the transmitter may be configured as a component of the entropy encoder 190.

The quantized transform coefficients output from the quantizer 130 may be used to generate a residual signal. For example, a residual signal (residual block or residual samples) may be reconstructed by applying dequantization and inverse transform to the quantized transform coefficients through the dequantizer 140 and the inverse transformer 150.

The adder 155 may generate a reconstructed signal (reconstructed picture, reconstructed block, or reconstructed sample array) by adding the reconstructed residual signal to the prediction signal output from the inter predictor 180 or the intra predictor 185. When there is no residual for the target block, such as when the skip mode is applied, the predicted block may be used as the reconstructed block. The adder 155 may be referred to as a reconstructor or a reconstructed block generator. The generated reconstructed signal may be used for intra prediction of the next target block within the current picture and, as described later, may also be used for inter prediction of the next picture after undergoing filtering.

Meanwhile, luma mapping with chroma scaling (LMCS) may be applied in a picture encoding and/or reconstruction process.

The filter 160 may apply filtering to the reconstructed signal to enhance subjective/objective quality. For example, the filter 160 may apply various filtering methods to the reconstructed picture to generate a modified reconstructed picture, and the modified reconstructed picture may be stored in the memory 170, specifically in the DPB of the memory 170. The various filtering methods may include, for example, deblocking filtering, sample adaptive offset, adaptive loop filter, bilateral filter, etc. The filter 160 may generate various filtering-related information, as described later in the explanations of each filtering method, and may transmit it to the entropy encoder 190. The filtering-related information may be encoded by the entropy encoder 190 and output in the form of a bitstream.

The modified reconstructed picture transmitted to the memory 170 may be used as a reference picture in the inter predictor 180. When inter prediction is applied in this case, the image encoding apparatus 100 may avoid prediction mismatches between the image encoding apparatus 100 and the image decoding apparatus, and may improve encoding efficiency.

The DPB in the memory 170 may store the modified reconstructed picture for use as a reference picture in the inter predictor 180. The memory 170 may store the motion information of a block in the current picture where motion information has been derived (or encoded) and/or the motion information of blocks in already reconstructed pictures. The stored motion information may be transmitted to the inter predictor 180 for use as motion information of spatial neighboring block or temporal neighboring block. The memory 170 may store the reconstructed samples of reconstructed blocks in the current picture and transmit them to the intra predictor 185.

## Overview of the image decoding apparatus

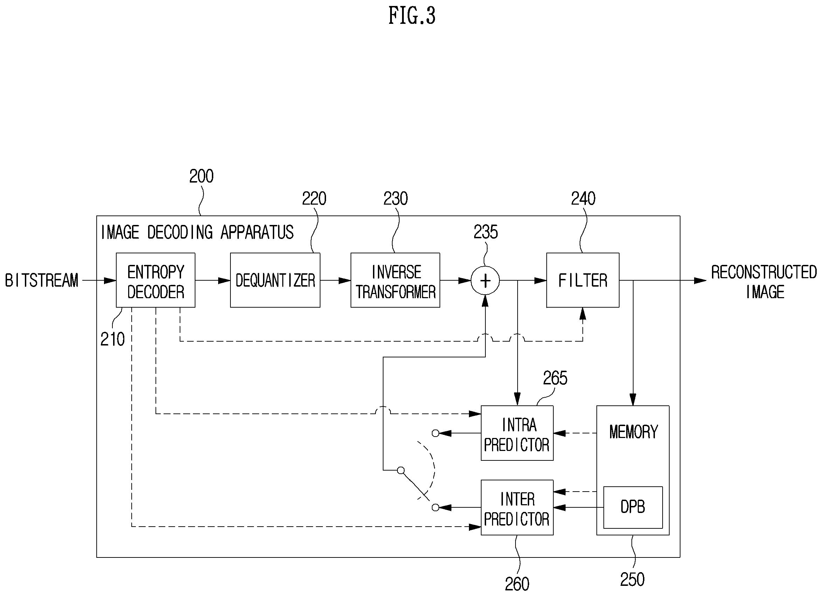

FIG. 3 shows a schematic diagram of an image decoding apparatus to which an embodiment according to the present disclosure may be applied.

As shown in FIG. 3, the image decoding apparatus 200 may include an entropy decoder 210, a dequantizer 220, an inverse transformer 230, an adder 235, a filter 240, a memory 250, an inter predictor 260, and an intra predictor 265. The inter predictor 260 and the intra predictor 265 may collectively be referred to as a "predictor". The dequantizer 220 and the inverse transformer 230 may be included in a residual processor.

All or at least some of the multiple components constituting the image decoding apparatus 200 may be implemented as a single hardware component (i.e., an image decoding apparatus 200 or a processor), depending on the embodiment. Additionally, the memory 170 may include a DPB and may be implemented by a digital storage medium.

The image decoding apparatus 200, which receives a bitstream containing video/image information, may perform a process corresponding to the process performed by the image encoding apparatus 100 in FIG. 2 to reconstruct the image. For example, the image decoding apparatus 200 may perform decoding using the processing unit applied in the image encoding apparatus 100. Therefore, the processing unit for decoding may be, for example, a coding unit. The coding unit may be a coding tree unit or may be obtained by splitting a largest coding unit. Additionally, the reconstructed image signal decoded and output through the image decoding apparatus 200 may be played back through a playback device (not shown).

The image decoding apparatus 200 may receive a signal output from the image encoding apparatus 100 in FIG. 2 in the form of a bitstream. The received signal may be decoded through the entropy decoder 210. For example, the entropy decoder 210 may parse the bitstream to extract the information necessary for image reconstruction (or picture reconstruction) (i.e., video/image information). The video/image information may further include information on various parameter sets, such as an adaptation parameter set (APS), a picture parameter set (PPS), a sequence parameter set (SPS), or a video parameter set (VPS). Additionally, the video/image information may further include general constraint information. The image decoding apparatus 200 may additionally use information on the parameter set and/or the general constraint information to decode the image. The signaling information, received information, and/or syntax elements described in the present disclosure may be obtained from the bitstream by being decoded through the decoding process. For example, the entropy decoder 210 may decode the information in the bitstream based on coding methods such as exponential Golomb encoding, CAVLC, or CABAC, and may output a syntax element value necessary for image reconstruction and quantized values of a transform coefficient related to a residual. More specifically, the CABAC entropy decoding method may receive a bin corresponding to a syntax element in the bitstream, may determine a context model using the information of the decoding target syntax element, the decoding information of neighboring block and the decoding target block, or information of previously decoded symbol/bin, may predict the probability of bin occurrence according to the determined context model, and may perform arithmetic decoding of the bin to generate a symbol corresponding to each syntax element. In this case, the CABAC entropy decoding method may update the context model for the next symbol/bin context model using the decoded symbol/bin information after determining the context model. Among the decoded information from the entropy decoder 210, the prediction-related information may be provided to the predictor (inter predictor 260 and intra predictor 265), and the residual value which is entropy decoded by the entropy decoder 210, in other words, the quantized transform coefficients and related parameter information, may be input to the dequantizer 220. Additionally, among the decoded information from the entropy decoder 210, filtering-related information may be provided to the filter 240. Meanwhile, a receiver (not shown) that receives the signal output from the image encoding apparatus 100 may be additionally configured as an internal/external element of the image decoding apparatus 200, or the receiver may be configured as a component of the entropy decoder 210.

Meanwhile, the image decoding apparatus 200 according to the present disclosure may also be referred to as a video/image/picture decoding apparatus. The image decoding apparatus 200 may include an information decoder (video/image/picture information decoder) and/or a sample decoder (video/image/picture sample decoder). The information decoder may include the entropy decoder 210, and the sample decoder may include at least one of the dequantizer 220, the inverse transformer 230, the adder 235, the filter 240, the memory 250, the inter predictor 260, or the intra predictor 265.

The dequantizer 220 may dequantize the quantized transform coefficients and output the transform coefficients. The dequantizer 220 may rearrange the quantized transform coefficients into a two-dimensional block. In this case, the rearrangement may be performed based on the coefficient scan order applied in the image encoding apparatus 100. The dequantizer 220 may perform dequantization on the quantized transform coefficients using quantization parameter (i.e., quantization step size information) and may obtain transform coefficients.

The inverse transformer 230 may perform an inverse transform on the transform coefficients to obtain a residual signal (residual block, or residual sample array).

The predictor may perform prediction for the current block and generate a predicted block that includes prediction samples for the current block. The predictor may determine whether intra prediction or inter prediction is applied to the current block based on the prediction-related information output from the entropy decoder 210 and may determine a specific intra/inter prediction mode (prediction method) .

That the predictor may generate a prediction signal based on various prediction methods (techniques) which will be described later is the same as described in the explanation of the predictor in the image encoding apparatus 100.

The intra predictor 265 may predict the current block by referring to samples within the current picture. The explanation of the intra predictor 185 may also be applied in the same way to the intra predictor 265.

The inter predictor 260 may derive a predicted block for the current block based on a reference block (reference sample array) specified by a motion vector on a reference picture. In this case, to reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on the inter prediction direction (i.e., L0 prediction, L1 prediction, Bi prediction, etc.). In inter prediction, a neighboring block may include spatial neighboring block within the current picture and temporal neighboring block in the reference picture. For example, the inter predictor 260 may construct a motion information candidate list based on neighboring blocks and derive the motion vector and/or reference picture index of the current block based on the received candidate selection information. Inter prediction may be performed based on various prediction modes (methods), and the prediction-related information may include information indicating the inter prediction mode (method) applied to the current block.

The adder 235 may generate a reconstructed signal (reconstructed picture, reconstructed block, reconstructed sample array) by adding the obtained residual signal to the prediction signal (predicted block, predicted sample array) output from the predictor (including the inter predictor 260 and/or the intra predictor 265). When there is no residual for the target block, such as when the skip mode is applied, the predicted block may be used as the reconstructed block. The explanation of the adder 155 may also be applied in the same way to the adder 235. The adder 235 may be referred to as a reconstructor or a reconstructed block generator. The generated reconstructed signal may be used for intra prediction of the next target block within the current picture and as described later, may also be used for inter prediction of the next picture after undergoing filtering.

The filter 240 may apply filtering to the reconstructed signal to enhance subjective/objective quality. For example, the filter 240 may apply various filtering methods to the reconstructed picture to generate a modified reconstructed picture, and the modified reconstructed picture may be stored in the memory 250, specifically in the DPB of the memory 250. The various filtering methods may include, for example, deblocking filtering, sample adaptive offset, adaptive loop filter, bilateral filter, etc.

The (modified) reconstructed picture stored in the DPB of the memory 250 may be used as a reference picture in the inter predictor 260. The memory 250 may store the motion information of a block in the current picture where motion information has been derived (or decoded) and/or the motion information of blocks in already reconstructed picture. The stored motion information may be transmitted to the inter predictor 260 to be used as motion information of a spatial neighboring block or a temporal neighboring block. The memory 250 may store the reconstructed samples of reconstructed blocks in the current picture and transmit them to the intra predictor 265.

In this specification, the embodiments described for the filter 160, the inter predictor 180, and the intra predictor 185 of the image encoding apparatus 100 may be applied in the same or corresponding manner to the filter 240, the inter predictor 260, and the intra predictor 265 of the image decoding apparatus 200.

## Transform/Inverse Transform

As described above, an image encoding apparatus 100 may derive a residual block (residual samples) based on a predicted block (prediction samples) through intra/inter/IBC prediction, etc., and may derive a quantized transform coefficient by applying transform and quantization to derived residual samples. Information on quantized transform coefficients (residual information) may be included in a residual coding syntax and output in the form of a bitstream after encoding.

An image decoding apparatus 200 may obtain information on the (quantized) transform coefficients (residual information) from the bitstream and decode it to derive quantized transform coefficients. An image decoding apparatus 200 may derive residual samples through dequantization/inverse transform based on quantized transform coefficients. As described above, at least one of quantization/dequantization and/or transform/inverse transform above may be omitted. When the quantization/dequantization is omitted, the quantized transform coefficient may be called a transform coefficient. When the transform/inverse transform is omitted, the transform coefficient may be called a coefficient or a residual coefficient, or may still be called a transform coefficient for the consistency of expression. Whether to omit the transform/inverse transform may be signaled based on transform_skip_flag.

In addition, in the present disclosure, a quantized transform coefficient and a transform coefficient may be referred to as a transform coefficient and a scaled transform coefficient, respectively. In this case, residual information may include information about transform coefficient(s), and information about the transform coefficient(s) may be signaled through a residual coding syntax. Transform coefficients may be derived based on the residual information (or information about the transform coefficient(s)), and scaled transform coefficients may be derived through inverse transform (scaling) for the transform coefficients. Residual samples may be derived based on inverse transform (transform) for the scaled transform coefficients. This may be applied/expressed in other parts of the present disclosure as well.

The transform/inverse transform may be performed based on transform kernel(s). For example, according to the present disclosure, a multiple transform selection (MTS) scheme may be applied. In this case, some of multiple transform kernel sets may be selected and applied to a current block. A transform kernel may be called various terms such as a transform matrix, a transform type, etc. For example, a transform kernel set may represent a combination of a vertical transform kernel (a vertical transform kernel) and a horizontal transform kernel (a horizontal transform kernel).

For example, MTS index information (or a mts_idx syntax element) may be generated/encoded in an encoding device and signaled to a decoding device in order to indicate one of the transform kernel sets. For example, a transform kernel set according to the value of MTS index information may be derived as in Table 1 below.

[Table 1]

| tu_mts_idx[ x0 ][ y0 ] | 0 | 1 | 2 | 3 | 4 |
|---|---|---|---|---|---|
| trTypeHor | 0 | 1 | 2 | 1 | 2 |
| trTypeVer | 0 | 1 | 1 | 2 | 2 |

The transform kernel set may be determined based on, for example, cu_sbt_horizontal_flag and cu_sbt_pos_flag. It may be determined based on cu_sbt_horizontal_flag and cu_sbt_pos_flag. When cu_sbt_horizontal_flag has a value of 1, it may represent that a current block is horizontally partitioned into two transform blocks, and when it has a value of 0, it may represent that a current block is vertically partitioned into two transform blocks. When cu_sbt_pos_flag has a value of 1, it may represent that tu_cbf_luma, tu_cbf_cb and tu_cbf_cr for the first transform block of a current block do not exist in a bitstream, and when it has a value of 0, it may represent that tu_cbf_luma, tu_cbf_cb and tu_cbf_cr for the second transform block of a current block do not exist in a bitstream. Table 2 below shows trTypeHor and trTypeVer according to cu_sbt_horizontal_flag and cu_sbt_pos_flag.

[Table 2]

| cu_sbt_horizontal_flag | cu_sbt_pos_flag | trTypeHor | trTypeVer |
|---|---|---|---|
| 0 | 0 | 2 | 1 |
| 0 | 1 | 1 | 1 |

(continued)

| cu_sbt_horizontal_flag | cu_sbt_pos_flag | trTypeHor | trTypeVer |
|---|---|---|---|
| 1 | 0 | 1 | 2 |
| 1 | 1 | 1 | 1 |

In the table, trTypeHor may represent a horizontal transform kernel, and trTypeVer may represent a vertical transform kernel. Here, 0, the value of trTypeHor/trTypeVer, may represent DCT2, 1, the value of trTypeHor/trTypeVer, may represent DST7, and 2, the value of trTypeHor/trTypeVer, may represent DCT8. However, this is an example, and another value may be mapped to another DCT/DST by promise.

Table 3 below illustratively represents basis functions for the above-described DCT2, DCT8 and DST7.

[Table 3]

| Transform Type | Basis function $T_i(j)$, $i, j = 0, 1,...,N-1$ |
|---|---|
| DCT-II | $$T_i(j) = \omega_0 \cdot \sqrt{\frac{2}{N}} \cdot \cos\left(\frac{\pi \cdot i \cdot (2j+1)}{2N}\right)$$ where, $$\omega_0 = \begin{cases} \sqrt{\frac{2}{N}} & i = 0 \\ 1 & i \neq 0 \end{cases}$$ |
| DCT-VIII | $$T_i(j) = \sqrt{\frac{4}{2N+1}} \cdot \cos\left(\frac{\pi \cdot (2i+1) \cdot (2j+1)}{4N+2}\right)$$ $$T_i(j) = \sqrt{\frac{4}{2N+1}} \cdot \sin\left(\frac{\pi \cdot (2i+1) \cdot (j+1)}{2N+1}\right)$$ |
| DST-VII | $$T_i(j) = \sqrt{\frac{4}{2N+1}} \cdot \sin\left(\frac{\pi \cdot (2i+1) \cdot (j+1)}{2N+1}\right)$$ |

In the present disclosure, the MTS-based transform is applied as primary transform, and secondary transform may be further applied. The secondary transform may be applied only to coefficients in the top-left wxh region of a coefficient block to which the primary transform is applied, and may be called reduced secondary transform (RST). For example, w and/or h above may be 4 or 8. In transform, the primary transform and the secondary transform may be sequentially applied to a residual block, and in inverse transform, inverse secondary transform and inverse primary transform may be sequentially applied to transform coefficients. The secondary transform (RST transform) may be called low frequency coefficients transform (LFCT) or low frequency non-separable transform (LFNST). The inverse secondary transform may be called inverse LFCT or inverse LFNST.

Hereinafter, an image encoding/decoding method according to various embodiments of the present disclosure will be described in detail.

## Embodiment 1

According to the present disclosure, a method for performing primary transform into a frequency domain through predefined transform from a space (pixel sample value) domain may include separable transform and non-separable transform. Alternatively, a transform skip that does not apply transform to a current block may also be considered as transform in a broad sense.

Since an image pixel is a value (a pixel value or a sample value) existing in a two-dimensional (a position having horizontal and vertical coordinates) space, when performing a transform process that changes these values to another domain (i.e., a frequency domain) by using specific basis vectors, complexity required may be very different according to a transform method. For separable transform, transforms in a horizontal direction and a vertical direction may be performed independently. Accordingly, the similarity and characteristics of pixel values (sample values) existing in a horizontal direction or a vertical direction may be expressed through transform. In this case, since separable transform is performed independently for a horizontal direction and a vertical direction, the size of a base vector required may be small and required computational complexity may be relatively small compared to non-separable transform.

Meanwhile, for non-separable transform, a basis vector having a size corresponding to the total number of pixels existing in a two-dimensional space may be used to identify the overall characteristics of pixel values existing in a two-dimensional space. Accordingly, non-separable transform may have large complexity required compared to separable transform. However, non-separable transform may express a similarity existing between pixels on a two-dimensional space very well. Accordingly, non-separable transform may provide improved encoding efficiency.

Considering the characteristics of separable transform and non-separable transform mentioned above, when two methods are appropriately selected and used, the compression performance of an image encoding apparatus 100 and/or an image decoding apparatus 200 may be improved. In addition, an image encoding apparatus 100 and/or an image decoding apparatus 200 may efficiently maintain the relatively required computational complexity by appropriately selecting and using two methods.

According to an embodiment of the present disclosure, the present disclosure may provide a method for always applying only separable transform as a primary transform method. Alternatively, the present disclosure may provide a method for always applying non-separable transform as a primary transform method. Alternatively, the present disclosure may provide a method for selectively applying one of separable transform and non-separable transform as a primary transform method. Alternatively, the present disclosure may provide a method for applying separable transform and non-separable transform together as a primary transform method. A separable transform-based primary transform method may include DCT type 2, DST type 7, DCT type 8, DCT type 5, DST type 4, DST type 1, identity transform (IDT) or any other transform method in which transform is performed independently in horizontal and vertical directions (e.g., transform skip).

The present disclosure may include non-separable primary transform (nspt) as one of the primary transform methods. In addition, the present disclosure may provide a method for effectively signaling information on activation/-deactivation of non-separable primary transform.

According to an embodiment of the present disclosure, non-separable primary transform activation for a luma block and/or a chroma block may be controlled through one flag. For example, as in Table 4 below, one sps_nspt_enabled_flag may be signaled in a SPS syntax for non-separable primary transform activation.

[Table 4]

| seq_parameter_set_rbsp( ) { | Descriptor |
|---|---|
| (...) | |
| **sps_nspt_enabled_flag** | u(1) |
| (...) | |
| } | |

Here, when the value of sps_nspt_enabled_flag is 1 (i.e., a second value), an image encoding apparatus 100 and/or an image decoding apparatus 200 may perform one of separable transform or non-separable transform as a primary transform method. When the value of sps_nspt_enabled_flag is 0 (i.e., a first value), an image encoding apparatus 100 and/or an image decoding apparatus 200 may perform only separable transform as a primary transform method. In this case, a flag for non-separable primary transform activation/deactivation (i.e., sps_nspt_enabled_flag) may be signaled not only through a SPS syntax, but also through an APS, a PPS, a VPS, a decoding parameter set (DPS), a picture header syntax or a slice header syntax, etc.

According to another embodiment of the present disclosure, non-separable primary transform activation for a luma block and/or a chroma block may be controlled through one flag. The present disclosure may signal one sps_nspt_enabled_flag in a SPS syntax as in Table 4 above for non-separable primary transform activation.

In this case, when the value of sps_nspt_enabled_flag is 1 (i.e., a second value), an image encoding apparatus 100 and/or an image decoding apparatus 200 may selectively perform one of separable transform or non-separable transform as a primary transform method. Alternatively, when the value of sps_nspt_enabled_flag is 1 (i.e., a second value), an image encoding apparatus 100 and/or an image decoding apparatus 200 may perform separate transform and non-separable transform together as a primary transform method.

In this case, whether to selectively perform one of separable transform or non-separable transform as a primary transform method or whether to perform separate transform and non-separable transform together may be explicitly determined through a separate flag. A flag indicating whether to selectively perform one of separable transform or non-separable transform or whether to perform separate transform and non-separable transform together as a primary transform method may be signaled in various high-level syntaxes such as a SPS, an APS, a PPS, a VPS, a DPS, a picture header syntax, a slice header syntax, etc. Alternatively, a flag indicating whether to selectively perform one of separable transform or non-separable transform or whether to perform separate transform and non-separable transform together as a primary transform method may be signaled in a low-level syntax such as a CTU, a CU, a TU, etc. A flag indicating whether to selectively perform one of separable transform or non-separable transform or whether to perform separate transform and non-separable transform together as a primary transform method may be signaled only when the value of sps_nspt_enabled_flag is 1 (i.e., a second value).

When the value of sps_nspt_enabled_flag is 0 (i.e., a first value), an image encoding apparatus 100 and/or an image decoding apparatus 200 may perform only separable transform as a primary transform method. In this case, a flag for non-separable primary transform activation/deactivation (i.e., sps_nspt_enabled_flag) may be signaled not only through a SPS syntax, but also through an APS, a PPS, a VPS, a decoding parameter set (DPS), a picture header syntax or a slice header syntax, etc.

## Embodiment 2

According to the present disclosure, a primary transform method from a spatial domain to a frequency domain may include a method for always applying only separable transform, a method for always applying only non-separable transform, a method for selectively applying one of separable transform and non-separable transform or a method for applying separable transform and non-separable transform together. Here, a separable transform-based primary transform method may include DCT type 2, DST type 7, DCT type 8, DCT type 5, DST type 4, DST type 1, IDT or any other transform method in which transform is performed independently in horizontal and vertical directions (i.e., a transform skip).

In various situations where non-separable primary transform (nspt) is included as one of the primary transform methods, the present disclosure may provide methods for effectively signaling a non-separable primary transform-related syntax element. For example, instead of applying non-separable transform to all transform blocks, an image encoding apparatus 100 and/or an image decoding apparatus 200 may apply non-separable transform only to a specific block by considering encoding efficiency and required computational complexity. Here, a specific block may be a square block, a non-square block, a block in which the number of pixels in a transform block is less than or equal to an arbitrary value or a block in which the width and/or height of a transform block is less than or equal to an arbitrary value. In other words, when the condition of a specific block is satisfied, a non-separable transform-related syntax element (i.e., a flag indicating whether to activate non-separable transform, a flag indicating whether to apply non-separable transform or a non-separable transform index) may be signaled.

In addition, an image encoding apparatus 100 and/or an image decoding apparatus 200 may determine whether to apply non-separable transform based on at least one of a square block, a non-square block, a block in which the number of pixels in a transform block is less than or equal to an arbitrary value or a block in which the width and/or height of a transform block is less than or equal to an arbitrary value.

According to an embodiment of the present disclosure, non-separable transform may be applied to some or all of the square blocks (i.e., 4x4, 8x8, 16x16, 32x32, etc.). Accordingly, for a square block, separable transform and/or non-separable transform may be considered as a primary transform method, and for a non-square block, only separable transform may be considered as a primary transform method. Through this, the present disclosure may improve compression efficiency through non-separable transform in a square block, and may prevent compression degradation due to transmission and/or storage of side information and an unnecessary syntax element and complexity increase due to non-separable transform in a non-square block.

According to another embodiment of the present disclosure, non-separable transform may be applied to some or all of the non-square blocks (i.e., 4x8, 8x4, 8x16, 16x8, 16x32, 32x16, etc.). Accordingly, for a non-square block, separable transform and/or non-separable transform may be considered as a primary transform method, and for a square block, only separable transform may be considered as a primary transform method. Through this, the present disclosure may improve compression efficiency through non-separable transform in a non-square block, and may prevent compression degradation due to transmission and/or storage of side information and an unnecessary syntax element and complexity increase due to non-separable transform in a square block.

According to another embodiment of the present disclosure, non-separable transform may be applied only to a block in which the number of pixels in a transform block is less than or equal to an arbitrary value. For example, non-separable transform may be applied only to a block in which the number of pixels in a transform block is less than or equal to 64. In this case, only for a block such as 4x4, 4x8, 8x4, 8x8, 4x16, 16x4, etc., separable transform and/or non-separable transform may be considered as a primary transform method. For a block in which the number of pixels in a transform block exceeds 64, only separable transform may be considered as a primary transform method. Through this, the present disclosure may improve compression efficiency through non-separable transform in a block in which the number of pixels in a transform block is less than or equal to an arbitrary value, and may prevent compression degradation due to transmission and/or storage of side information and an unnecessary syntax element and complexity increase due to non-separable transform in a block in which the number of pixels in a transform block exceeds an arbitrary value.

According to another embodiment of the present disclosure, non-separable transform may be applied only to a block in which the width and/or height of a transform block is less than or equal to an arbitrary value. For example, when non-separable transform is applied only to a block in which the width of a transform block is less than or equal to 8, separable transform and/or non-separable transform may be considered as a primary transform method only for a block such as 4x4, 4x8, 4x16, 8x4, 8x8, 8x16, etc. For a block in which the width of a transform block exceeds 8, only separable transform may be considered as a primary transform method. Through this, the present disclosure may improve compression efficiency through non-separable transform in a block in which the width and/or height of a transform block is less than or equal to an arbitrary value, and may prevent compression degradation due to transmission and/or storage of side information and an unnecessary syntax element and complexity increase due to non-separable transform in a block in which the width and/or height of a transform block exceeds an arbitrary value.

## Embodiment 3

According to the present disclosure, a primary transform method from a spatial domain to a frequency domain may include a method for always applying only separable transform, a method for always applying only non-separable transform, a method for selectively applying one of separable transform and non-separable transform or a method for applying separable transform and non-separable transform together. Here, a separable transform-based primary transform method may include DCT type 2, DST type 7, DCT type 8, DCT type 5, DST type 4, DST type 1, IDT or any other transform method in which transform is performed independently in horizontal and vertical directions (i.e., a transform skip). In various situations where non-separable primary transform (nspt) is included as one of the primary transform methods, the present disclosure may provide methods for effectively signaling a non-separable primary transform-related syntax element.

A non-separable transform set and/or kernel may be determined by considering the statistical distribution of residual data according to information such as whether the prediction mode of a current block is an intra prediction mode or an inter prediction mode, the intra prediction mode of a current block, the size information of a current block (i.e., the width and/or height of a block, a block shape, the number of pixels in a block, etc.), an explicitly signaled syntax element, statistical characteristics of neighboring pixels (all or some pixels included in blocks adjacent to the top and/or left of a current block), whether to use secondary transform, a quantization parameter (QP), etc.

According to an embodiment of the present disclosure, a non-separable transform set and/or kernel may be determined based on whether the prediction mode of a current block is an intra prediction mode or an inter prediction mode. For an inter prediction mode, since the amount of residual data is not large, using a large number of non-separable transform sets and/or kernels may not provide significant coding efficiency. Accordingly, in order to reduce the memory consumed for storing a non-separable primary transform kernel and reduce the overhead according to signaling of a non-separable primary transform syntax element/side information, the present disclosure may have a smaller number of transform sets and/or kernels for an inter prediction mode block compared to an intra prediction mode block.

According to another embodiment of the present disclosure, a different number of non-separable transform sets and/or kernels may be provided according to the intra prediction mode of a current block. In this case, since a block to which a planar mode, a DC mode or a wide angle intra prediction (WAIP) mode is applied has less diverse residual characteristics than a block to which other intra prediction modes are applied, it may have a smaller number of non-separable transform sets and/or kernels. Accordingly, an image encoding apparatus 100 and/or an image decoding apparatus 200 may expect the effects of improving coding efficiency, reducing the memory consumed for storing a non-separable primary transform kernel and reducing the overhead due to non-separable primary transform syntax element/side information signaling.

According to another embodiment of the present disclosure, an image encoding apparatus 100 and/or an image decoding apparatus 200 may have a non-separable transform set and/or kernel based on at least one of block size information (i.e., the width and/or height of a block, a block shape, the number of pixels in a block), an explicitly signaled syntax element, statistical characteristics of neighboring pixels (all or some pixels included in blocks adjacent to the top and/or left of a current block), whether to use secondary transform or a QP.

This is because the residual characteristics of each block may vary depending on at least one of block size information (i.e., the width and/or height of a block, a block shape, the number of pixels in a block), an explicitly signaled syntax element, statistical characteristics of neighboring pixels (all or some pixels included in blocks adjacent to the top and/or left of a current block), whether to use secondary transform or a QP. Accordingly, an image encoding apparatus 100 and/or an image decoding apparatus 200 may expect the effects of improving coding efficiency, reducing the memory consumed for storing a non-separable primary transform kernel and reducing the overhead due to non-separable primary transform syntax element/side information signaling.

When having a different number of non-separable transform kernels according to embodiments of the present disclosure, an image encoding apparatus 100 and/or an image decoding apparatus 200 may signal/parse a non-separable transform-related syntax element in various ways.

According to an embodiment of the present disclosure, when there is one non-separable kernel and there are multiple separable transform kernels, non-separable transform may be configured as transform index 0 (i.e., a first value), and the transform index of separable transform may be configured from 1 (i.e., a second value). In other words, when there is one non-separable transform kernel and there are multiple separable transform kernels, transform index 0 may represent a non-separable transform kernel, and transform indexes 1 to N+1 may represent N separable transform kernels. Here, N may be a natural number. "Transform index" mentioned below may be used as a concept including various indexes such as "non-separable transform index", "separable transform index", "non-separable primary transform index", "index representing a non-separable transform kernel", "index representing a separable transform kernel", etc.

For example, when there are five separable transform possibilities, transform index 0 may represent non-separable transform, and transform indexes 1 to 5 may represent predefined separable transform. In other words, when there are five separable transform possibilities, transform index 0 may represent a non-separable transform kernel, and transform indexes 1 to 5 may represent a predefined separable transform kernel, respectively. Accordingly, a transform index value of 0 to 5 may be signaled from an image encoding apparatus 100 to an image decoding apparatus 200, and whether to use non-separable transform or separable transform may be known based on a decoded transform index value. In addition, which separable transform was used may be determined based on a decoded transform index value. It is natural that which separable transform kernel or non-separable transform kernel was used may be determined based on a decoded transform index value.

According to another embodiment of the present disclosure, when there is one non-separable transform kernel and there are multiple separable transform kernels, the transform index of separable transform may be configured from 0 (i.e., a first value), and the transform index of non-separable transform may be configured as the maximum transform index (the last transform index). In other words, when there is one non-separable transform kernel and the number of separable transform kernels is N, transform indexes 0 to N-1 may represent a predefined separable transform kernel, respectively, and transform index N may represent a non-separable transform kernel. Here, N may be a natural number.

For example, when there are five separable transform possibilities, transform indexes 0 to 4 may represent predefined separable transform, and transform index 5 may represent non-separable transform. In other words, transform indexes 0 to 4 may represent a predefined separable transform kernel, respectively, and transform index 5 may represent a non-separable transform kernel. Accordingly, a transform index value of 0 to 5 may be signaled from an image encoding apparatus 100 to an image decoding apparatus 200, and whether to use non-separable transform or separable transform may be known based on a decoded transform index value. In addition, which separable transform was used may be determined based on a decoded transform index value. It is natural that which separable transform kernel or non-separable transform kernel was used may be determined based on a decoded transform index value.

According to another embodiment of the present disclosure, when there is one non-separable transform kernel and there are multiple separable transform kernels, an index indicating non-separable transform may be configured as predefined N, and an index indicating separable transform may be defined in order excluding N starting from 0 to the maximum index value predefined (i.e., M) (but, M >=N). In other words, when there is one non-separable transform kernel and there are multiple separable transform kernels, an index indicating a non-separable transform kernel may be configured as predefined N, and an index indicating a separable transform kernel may be defined in order excluding N starting from 0 to the maximum index value predefined (i.e., M). Here, M and N may be a natural number.

For example, when five separable transforms are available and the index of non-separable transform is defined as 3, the index of separable transform may be allocated in predetermined order from 0 to 5, but may be allocated by skipping transform index 3. In other words, transform indexes 0 to 2 and 4 to 5 may represent a separate transform kernel. In this case, a transform index value of 0 to 5 may be signaled from an image encoding apparatus 100 to an image decoding apparatus 200, and whether to use non-separable transform or separate transform may be known based on a decoded transform index value. In addition, which separable transform was used may be determined based on a decoded transform index value. It is natural that which separable transform kernel or non-separable transform kernel was used may be determined based on a decoded transform index value.

According to another embodiment of the present disclosure, when there is one non-separable transform kernel and there are multiple separable transform kernels, whether to perform non-separable transform may be signaled first through a flag indicating whether to perform non-separable transform. In other words, an image encoding apparatus 100 and/or an image decoding apparatus 200 may signal a flag indicating whether to perform non-separable transform.

According to this embodiment, when a flag indicating whether to perform non-separable transform is 0 (i.e., a first value), the index of separable transform may be additionally signaled. The value of a flag indicating whether to perform non-separable transform may be signaled by predicting a probability through a context coded bin. In this case, a context model for probability prediction may be constructed by using the size of a block, the shape of a block, an intra prediction mode or information of previously coded blocks, etc.

The value of a transform index according to the present disclosure may be binarized through a fixed length code (FLC) or a truncated binary code (TBC). In this case, the value of a transform index may be encoded and/or decoded through context coding or bypass coding. Here, context coding may refer to coding performed by treating a transform index as a context coded bin. Bypass coding may refer to coding performed by treating a transform index as a bypass coded bin.

Alternatively, a transform index may be expressed through truncated unary (TU) binarization. A transform index expressed through TU binarization may be encoded and/or decoded by predicting an occurrence probability through context coding or may be encoded and/or decoded with the same probability through bypass coding.

According to another embodiment of the present disclosure, when there are at least two non-separable transform kernels and there are multiple separable transform kernels, a flag indicating whether to perform non-separable transform may be signaled first. When a flag indicating whether to perform non-separable transform is 1 (i.e., a second value), an image encoding apparatus 100 and/or an image decoding apparatus 200 may additionally signal an index indicating a non-separable transform kernel. When a flag indicating whether to perform non-separable transform is 0 (i.e., a first value), an image encoding apparatus 100 and/or an image decoding apparatus 200 may additionally signal an index indicating a separable transform kernel. In this case, the value of an index indicating a non-separable transform kernel or the value of an index indicating a separable transform kernel may be binarized through a FLC or a TBC. In this case, a transform index may be encoded and/or decoded through context coding or bypass coding.

Alternatively, a transform index may be expressed through truncated unary (TU) binarization. A transform index expressed through TU binarization may be encoded and/or decoded by predicting an occurrence probability through context coding or may be encoded and/or decoded with the same probability through bypass coding. In addition, a flag indicating whether to perform non-separable transform may be encoded and/or decoded by predicting a probability through a context coded bin. In this case, a context model for probability prediction may use the size of a block, the shape of a block, an intra prediction mode or information of previously coded blocks, etc.

According to another embodiment of the present disclosure, when there are at least two non-separable transform kernels and there are multiple separable transform kernels, a transform index may be signaled at once without separately signaling a flag indicating whether to perform non-separable transform. For example, when there are N non-separable transform kernels and M available separable transform kernels, if a transform index value is 0 to N-1, it represents N non-separable transform kernels (0 ~ N-1) and if a transform index value is N to N+M-1, it represents separable transform indexes 0 to (M-1).

In other words, when there are N non-separable transform kernels and M available separable transform kernels, if the value of a transform index is 0 to N-1, a corresponding transform index may be an index indicating N non-separable transform kernels. Alternatively, when there are N non-separable transform kernels and M available separable transform kernels, if the value of a transform index is N to N+M-1, a corresponding transform index may be an index indicating M separable transform kernels. Here, N and M may be a natural number. In addition to the above-described case, a method for mapping an available separable transform index and a non-separable transform kernel from a transform index may be applied in various ways in a predefined form.

According to another embodiment of the present disclosure, when there are at least two non-separable transform kernels and there are multiple separable transform kernels, a transform index may be signaled at once without separately signaling a flag indicating whether to perform non-separable transform. For example, when there are N non-separable transform kernels and M available separable transform kernels, if a transform index value is 0 to M-1, it represents M separable transform kernels (0 ~ M-1) and if a transform index value is M to N+M-1, it represents non-separable transform indexes 0 to (N-1).

In other words, when there are N non-separable transform kernels and M available separable transform kernels, if the value of a transform index is 0 to M-1, a corresponding transform index may be an index indicating M separable transform kernels. Alternatively, when there are N non-separable transform kernels and M available separable transform kernels, if the value of a transform index is M to N+M-1, a corresponding transform index may be an index indicating N non-separable transform kernels. Here, N and M may be a natural number. In addition to the above-described case, a method for mapping an available separable transform index and a non-separable transform kernel from a transform index may be applied in various ways in a predefined form.

When defining a separable transform index in various embodiments described above, an image encoding apparatus 100 and/or an image decoding apparatus 200 may determine a transform to be applied in a horizontal direction and a vertical direction according to a predetermined rule through the value of a given separable transform index. Alternatively, a separable transform index may be signaled by being divided into a horizontal separable transform index and a vertical separable transform index, and transform designated by each index may be applied to a corresponding direction.

A non-separable transform activation flag mentioned in the present disclosure may be signaled in a high-level syntax (i.e., a SPS, an APS, a PPS, a VPS, a DPS, a picture header, a slice header, etc.). Alternatively, a flag indicating whether to perform the non-separable transform or a non-separable transform activation flag may not be signaled separately according to a promise always considered as a primary transform candidate.

The flag indicating whether to perform the non-separable transform described above may be a flag indicating whether to perform the non-separable transform as primary transform. In addition, the non-separable transform activation flag described above may be a flag indicating whether non-separable transform is activated as primary transform.

**Embodiment 4**

According to the present disclosure, a primary transform method from a spatial domain to a frequency domain may include a method for always applying only separable transform, a method for always applying only non-separable transform, a method for selectively applying one of separable transform and non-separable transform or a method for applying separable transform and non-separable transform together. Here, a separable transform-based primary transform method may include DCT type 2, DST type 7, DCT type 8, DCT type 5, DST type 4, DST type 1, IDT or any other transform method in which transform is performed independently in horizontal and vertical directions (i.e., a transform skip).

For non-separable transform, since computational complexity and/or memory requirement are greater than those of separable transform, it is necessary to reduce computational complexity and power consumption through various methods. Accordingly, the present disclosure proposes a signaling method of a non-separable transform syntax element for an efficient transform structure.

For non-separable transform, since computational complexity and memory requirement are greater than those of separable transform, a method for reducing complexity and power consumption by adjusting the worst case computational complexity may be necessary. Accordingly, when non-separable primary transform is used, the use of non-separable secondary transform may be restricted. An image encoding apparatus 100 and/or an image decoding apparatus 200 may designate a syntax element for a non-separable secondary transform technology to be encoded and/or decoded after a syntax element for a non-separable primary transform technology. In other words, an image encoding apparatus 100 may not consider non-separable secondary transform when non-separable primary transform is used. An image decoding apparatus 200 may not parse a syntax element for a non-separable primary transform technology when after parsing a syntax element for a non-separable primary transform technology, it is information that non-separable primary transform was used. In other words, when a syntax element for a non-separable primary transform technology shows that non-separable primary transform is used, an image decoding apparatus 200 may not parse a syntax element for a non-separable secondary transform technology. In this case, an image decoding apparatus 200 may restrict the use of secondary transform.

According to another embodiment of the present disclosure, an image encoding apparatus 100 and/or an image decoding apparatus 200 may designate a syntax element for a non-separable primary transform technology to be encoded and/or decoded after a syntax element for a non-separable secondary transform technology. An image encoding apparatus 100 may not consider non-separable primary transform when non-separable secondary transform is used. An image decoding apparatus 200 may not parse a syntax element for a non-separable primary transform technology when after parsing a syntax element for a non-separable secondary transform technology, it is information that non-separable secondary transform was used. In other words, when a syntax element for a non-separable secondary transform technology shows that non-separable secondary transform is used, an image decoding apparatus 200 may not parse a syntax element for a non-separable primary transform technology. In this case, an image decoding apparatus 200 may perform separable transform in primary transform.

For a block with a small number of residual coefficients in a current transform block or a block without a relatively high frequency component, it may be more efficient to use one non-separable transform kernel than to use multiple non-separable transform kernels. In this case, an image encoding apparatus 100 and/or an image decoding apparatus 200 may obtain more efficient compression performance by reducing bit consumption for signaling a non-separable transform syntax element and/or kernel. Conversely, since a block with a large number of residual coefficients in a current transform block or a block with lots of relatively high frequency components may have various characteristics, it may be efficient to use multiple non-separable transform kernels even when additional signaling is performed. Alternatively, it may be efficient to use separable transform instead of non-separable primary transform based on the number of residual coefficients in a current transform block or the characteristics of a current transform block.

In order to use the characteristics of a residual coefficient of a current transform block, an image encoding apparatus 100 and/or an image decoding apparatus 200 may designate a syntax element for a non-separable primary transform technology to be coded after a residual coding (or transform coefficient coding) syntax element. For example, an image encoding apparatus 100 and/or an image decoding apparatus 200 may code a syntax element for a primary transform technology after a residual coding syntax element, but may or may not signal a syntax element indicating the use of a non-separable transform technology based on the number of residual coefficients in a transform block or the position of the last residual coefficient.

Specifically, when the number of residual coefficients or the position of the last residual coefficient is less than (or less than or equal to) a specific threshold value, an image encoding apparatus 100 and/or an image decoding apparatus 200 may determine that there are relatively few high frequency components, and accordingly, may not signal or may signal restrictively a syntax element related to a non-separable transform technology. Alternatively, when the number of residual coefficients or the position of the last residual coefficient is greater than (or greater than or equal to) a specific threshold value, an image encoding apparatus 100 and/or an image decoding apparatus 200 may determine that there are relatively many high frequency components, and accordingly, may signal a syntax element related to a non-separable transform technology only in this case.

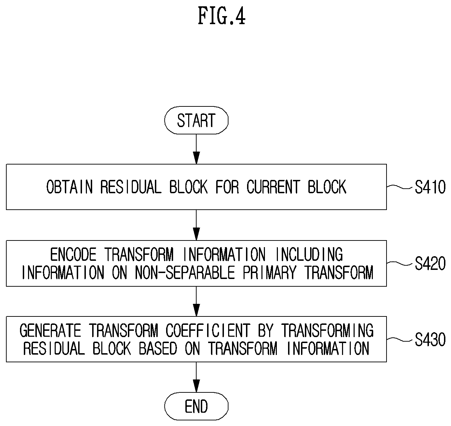

FIG. 4 is a flowchart of an image encoding method according to the present disclosure. According to the present disclosure, an image encoding apparatus 100 may obtain a residual block for a current block S410. In addition, an image encoding apparatus 100 may encode transform information including information on non-separable primary transform S420. An image encoding apparatus 100 may generate a transform coefficient by transforming a residual block based on transform information S430.

Here, transform information may include a non-separable primary transform activation flag indicating whether non-separable primary transform is available for a current block. A non-separable primary transform activation flag may be sps_nspt_enabled_flag. When the value of a non-separable primary transform activation flag is a first value (i.e., 0), separable primary transform may be available for a current block. When the value of a non-separable primary transform activation flag is a second value (i.e., 1), one of non-separable primary transform or separable primary transform may be available for a current block.

According to an embodiment of the present disclosure, transform information may include a non-separable primary transform application flag indicating whether non-separable primary transform is applied to a current block. A non-separable primary transform application flag may be encoded based on at least one of the shape of a current block or the size of a current block. For example, a non-separable primary transform application flag may be encoded based on at least one of a square block, a non-square block, a block in which the number of pixels in a transform block is less than or equal to an arbitrary value or a block in which the width and/or height of a transform block is less than or equal to an arbitrary value.

According to an embodiment of the present disclosure, transform information may include a kernel index indicating one of a plurality of transform kernels. A plurality of transform kernels may include at least one non-separable transform kernel and at least one separable transform kernel. 'Kernel index' according to the present disclosure may be referred to as 'transform index' or another term having the technical meaning equivalent thereto.

According to an embodiment of the present disclosure, when a non-separable primary transform application flag shows that non-separable primary transform is applied to a current block, an image decoding apparatus 200 may encode a non-separable transform kernel index indicating one of a plurality of non-separable transform kernels. When a non-separable primary transform application flag shows that non-separable primary transform is not applied to a current block, a separable transform kernel index indicating one of a plurality of separable transform kernels may be encoded. Here, the number of non-separable transform kernels or separable transform kernels may be determined based on at least one of whether intra prediction is applied to a current block, an intra prediction mode, a block size, a neighboring sample value, whether secondary transform is used or a quantization parameter.

According to an embodiment of the present disclosure, when non-separable primary transform is applied to a current block, non-separable secondary transform may be restricted. In this case, information on non-separable primary transform may be transmitted before information on non-separable secondary transform for a current block, and transmission of information on non-separable secondary transform for a current block may be skipped.

According to an embodiment of the present disclosure, when non-separable secondary transform is applied to a current block, non-separable primary transform may be restricted. In this case, information on non-separable secondary transform may be transmitted before information on non-separable primary transform for a current block, and transmission of information on non-separable primary transform for a current block may be skipped.

According to an embodiment of the present disclosure, information on non-separable primary transform may be encoded based on characteristics of a residual coefficient. For example, a block with a small number of residual coefficients may use one non-separable transform kernel instead of using multiple non-separable transform kernels. As another example, a block with a large number of residual coefficients may use multiple non-separable transform kernels.

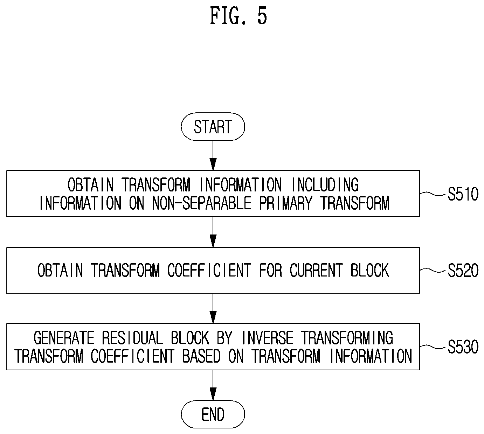

FIG. 5 is a flowchart of an image decoding method according to the present disclosure. According to the present disclosure, an image decoding apparatus 200 may obtain transform information including information on non-separable primary transform S510. Afterwards, an image decoding apparatus 200 may obtain a transform coefficient for a current block S520. An image decoding apparatus 200 may generate a residual block by inverse-transforming a transform coefficient based on obtained transform information S530.

Here, transform information may include a non-separable primary transform activation flag indicating whether non-separable primary transform is available for a current block. A non-separable primary transform activation flag may be sps_nspt_enabled_flag.

When the value of a non-separable primary transform activation flag is a first value (i.e., 0), separable primary transform may be available for a current block. When the value of a non-separable primary transform activation flag is a second value (i.e., 1), one of non-separable primary transform or separable primary transform may be available for a current block.

According to an embodiment of the present disclosure, transform information may include a non-separable primary transform application flag indicating whether non-separable primary transform is applied to a current block. A non-separable primary transform application flag may be obtained based on at least one of the shape of a current block or the size of a current block. For example, a non-separable primary transform application flag may be obtained based on at least one of a square block, a non-square block, a block in which the number of pixels in a transform block is less than or equal to an arbitrary value or a block in which the width and/or height of a transform block is less than or equal to an arbitrary value.

According to an embodiment of the present disclosure, transform information may include a kernel index indicating one of a plurality of transform kernels. A plurality of transform kernels may include at least one non-separable transform kernel and at least one separable transform kernel. Here, according to the present disclosure, 'kernel index' may be referred to as 'transform index' or another term having the technical meaning equivalent thereto.

According to an embodiment of the present disclosure, when a non-separable primary transform application flag shows that non-separable primary transform is applied to a current block, an image decoding apparatus 200 may obtain a non-separable transform kernel index indicating one of a plurality of non-separable transform kernels. When a non-separable primary transform application flag shows that non-separable primary transform is not applied to a current block, a separable transform kernel index indicating one of a plurality of separable transform kernels may be obtained. Here, the number of non-separable transform kernels or separable transform kernels may be obtained based on at least one of whether intra prediction is applied to a current block, an intra prediction mode, a block size, a neighboring sample value, whether secondary transform is used or a quantization parameter.

According to an embodiment of the present disclosure, when non-separable primary transform is applied to a current block, non-separable secondary transform may be restricted. In this case, information on non-separable primary transform may be parsed before information on non-separable secondary transform for a current block, and parsing of information on non-separable secondary transform for a current block may be skipped.

According to an embodiment of the present disclosure, when non-separable secondary transform is applied to a current block, non-separable primary transform may be restricted. In this case, information on non-separable secondary transform may be parsed before information on non-separable primary transform for a current block, and parsing of information on non-separable primary transform for a current block may be skipped.

According to an embodiment of the present disclosure, information on non-separable primary transform may be encoded based on characteristics of a residual coefficient. For example, a block with a small number of residual coefficients may use one non-separable transform kernel instead of using multiple non-separable transform kernels. As another example, a block with a large number of residual coefficients may use multiple non-separable transform kernels.

Although the exemplary methods of the present disclosure are expressed as a series of operations for clarity of description, it is not intended to limit the order in which steps are performed, and each step may be performed simultaneously or in different order, if necessary. In order to implement a method according to the present disclosure, another step may be additionally included in a step illustrated, or the remaining steps may be included excluding some steps, or another additional step may be included excluding some steps.

In the present disclosure, an image encoding apparatus 100 or an image decoding apparatus 200 that performs a predetermined operation (step) may perform an operation (step) that confirms a condition or a situation for performing a corresponding operation (step). For example, when it is described that a predetermined operation is performed when a predetermined condition is satisfied, an image encoding apparatus 100 or an image decoding apparatus 200 may perform an operation for confirming whether the predetermined condition is satisfied, and then perform the predetermined operation.

The various embodiments of the present disclosure are not intended to list all possible combinations, but are intended to describe the representative aspect of the present disclosure, and matters described in various embodiments may be applied independently or in a combination of at least two.

In addition, various embodiments of the present disclosure may be implemented by hardware, firmware, software or a combination thereof. For implementation by hardware, it may be implemented by one or more ASCIS (application specific integrated circuits), DSPs (digital signal processors), DSPDs (digital signal processing devices), PLDs (programmable logic devices), FPGAs (field programmable gate arrays), general processors, controllers, micro controllers, micro processors, etc.

In addition, an image decoding apparatus 200 and an image encoding apparatus 100 to which the embodiment of the present disclosure is applied may be included in a multimedia broadcasting transmission and reception device, a mobile communication terminal, a home cinema video device, a digital cinema video device, a surveillance camera, a video communication device, a real-time communication device such as a video communication, etc., a mobile streaming device, a storage medium, a camcorder, a video-on-demand (VoD) service providing device, a OTT video (over the top video) device, an Internet streaming service providing device, a three-dimensional (3D) video device, a video phone video device, and a medical video device, etc., and may be used to process a video signal or a data signal. For example, an OTT video (over the top video) device may include a game console, a Blu-ray player, an Internet-connected TV, a home theater system, a smartphone, a tablet PC, a digital video recorder (DVR), etc.

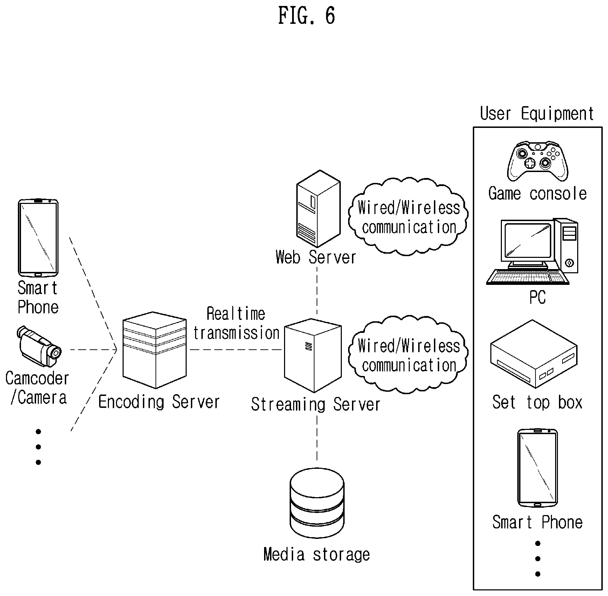

FIG. 6 shows an exemplary diagram of a content streaming system to which an embodiment of the present disclosure may be applied.

As shown in FIG. 6, the content streaming system to which an embodiment of the present disclosure is applied may broadly include an encoding server, a streaming server, a web server, a media storage, a user device, and a multimedia input device.

The encoding server compresses content input from multimedia input devices such as a smartphone, camera, or camcorder into digital data, generating a bitstream and transmitting it to the streaming server. As another example, when multimedia input devices such as a smartphone, camera, or camcorder directly generate a bitstream, the encoding server may be omitted.

The bitstream may be generated by the image encoding method and/or the image encoding apparatus 100 to which an embodiment of the present disclosure is applied, and the streaming server may temporarily store the bitstream during the process of transmitting or receiving the bitstream.

The streaming server may transmit multimedia data to a user device based on a user request through the web server, and the web server may serve as an intermediary that informs user of available service. When a user requests a desired service from the web server, the web server may send the request to the streaming server, and the streaming server may transmit the multimedia data to the user. In this case, the content streaming system may include a separate control server, and in this case, a control server may function to control command/response exchanges between devices within the content streaming system.

The streaming server may receive content from a media storage and/or an encoding server. For example, when receiving content from the encoding server, the content may be received in real time. In this case, to provide a seamless streaming service, the streaming server may store the bitstream for a certain period of time.

Examples of the user device may include a mobile phone, a smartphone, a laptop computer, a digital broadcasting terminal, a personal digital assistant (PDA), a portable multimedia player (PMP), a navigation device, a slate PC, a tablet PC, an ultrabook, a wearable device (i.e., a smartwatch, a smart glass, a head-mounted display (HMD)), a digital TV, a desktop computer, and digital signage.

Each server within the content streaming system may be operated as a distributed server, in which case the data received by each server may be processed in a distributed manner.

The range of the present disclosure includes software or machine-executable instructions (i.e., an operating system, an application, firmware, a program, etc.) that enable operations according to the methods of various embodiments to be executed on a device or computer, and a non-transitory computer-readable medium in which such software or instructions are stored and executable on a device or computer.

[Industrial Applicability]

The embodiments of the present disclosure may be used for encoding/decoding an image.

**Claims**

1. An image decoding method performed by an image decoding apparatus, comprising:

    obtaining transform information including information on a non-separable primary transform;
    obtaining a transform coefficient for a current block; and
    generating a residual block by inverse-transforming the transform coefficient based on the transform information.

2. The image decoding method of claim 1, wherein the transform information includes a non-separable primary transform activation flag indicating whether the non-separable primary transform is available for the current block,

    wherein based on a value of the non-separable primary transform activation flag being a first value, it indicates that a separable primary transform is available for the current block, and
    wherein based on the value of the non-separable primary transform activation flag being a second value, it indicates that one of the non-separable primary transform or the separable primary transform is available for the current block.

3. The image decoding method of claim 1, wherein based on at least one of a shape of the current block or a size of the current block, the transform information includes a non-separable primary transform application flag indicating whether the non-separable primary transform is applied to the current block.

4. The image decoding method of claim 1, wherein the transform information includes a kernel index indicating one of a plurality of transform kernels, and
wherein the plurality of transform kernels includes at least one non-separable transform kernel and at least one separable transform kernel.

5. The image decoding method of claim 1, wherein the transform information includes a non-separable primary transform application flag indicating whether the non-separable primary transform is applied to the current block,

> wherein a non-separable transform kernel index indicating one of a plurality of non-separable transform kernels is obtained based on the non-separable primary transform application flag indicating that the non-separable primary transform is applied to the current block, and
> wherein a separable transform kernel index indicating one of a plurality of separable transform kernels is obtained based on the non-separable primary transform application flag indicating that the non-separable primary transform is not applied to the current block.

6. The image decoding method of claim 4, wherein a number of the non-separable transform kernels or the separable transform kernels is obtained based on at least one of whether an intra prediction is applied to the current block, an intra prediction mode, a block size, a neighboring sample value, whether to use a secondary transform or a quantization parameter.

7. The image decoding method of claim 1, wherein based on the non-separable primary transform being applied to the current block, a secondary transform for the current block is restricted to not being a non-separable transform.

8. The image decoding method of claim 7, wherein the information on the non-separable primary transform is parsed before information on a non-separable secondary transform for the current block, and
wherein based on the non-separable primary transform being applied to the current block, parsing of the information on the non-separable secondary transform is skipped.

9. The image decoding method of claim 1, wherein based on a non-separable secondary transform for the current block being applied, a primary transform for the current block is restricted to not being a non-separable transform.

10. The image decoding method of claim 9, wherein information on the non-separable secondary transform for the current block is parsed before the information on the non-separable primary transform, and
wherein based on a non-separable secondary transform being applied to the current block, parsing of the information on the non-separable secondary transform is skipped.

11. The image decoding method of claim 1, wherein the information on the non-separable primary transform is encoded based on characteristics of a residual coefficient.

12. An image encoding method performed by an image encoding apparatus, comprising:

> obtaining a residual block for a current block;
> encoding transform information including information on a non-separable primary transform; and
> generating a transform coefficient by transforming the residual block based on the transform information.

13. A computer-readable recording medium storing a bitstream generated by the image encoding method of claim 12.

14. A method for transmitting a bitstream generated by an image encoding method, the image encoding method comprising:

> obtaining a residual block for a current block;
> encoding transform information including information on a non-separable primary transform; and
> generating a transform coefficient by transforming the residual block based on the transform information.

FIG.1

```
                    10                              20

        ┌─────────────────────┐        ┌─────────────────────┐
        │  ┌───────────────┐  │        │  ┌───────────────┐  │
  11 ───┤  │ VIDEO SOURCE  │  │        │  │   RENDERER    │  ├─── 23
        │  │   GENERATOR   │  │        │  └───────▲───────┘  │
        │  └───────┬───────┘  │        │          │          │
        │          │          │        │          │          │
        │          ▼          │        │          │          │
  12 ───┤  ┌───────────────┐  │        │  ┌───────┴───────┐  │
        │  │    ENCODER    │  │        │  │    DECODER    │  ├─── 22
        │  └───────┬───────┘  │        │  └───────▲───────┘  │
        │          │          │        │          │          │
        │          ▼          │        │          │          │
  13 ───┤  ┌───────────────┐  │        │  ┌───────┴───────┐  │
        │  │  TRANSMITTER  ├──┼────────┼─▶│   RECEIVER    │  ├─── 21
        │  └───────────────┘  │        │  └───────────────┘  │
        └─────────────────────┘        └─────────────────────┘
```

# FIG.2

EP 4 604 541 A1

FIG.3

EP 4 604 541 A1

FIG.4

```
                          ┌─────────┐
                          │  START  │
                          └────┬────┘
                               │
                               ▼
┌──────────────────────────────────────────────────┐
│       OBTAIN RESIDUAL BLOCK FOR CURRENT BLOCK      │──── S410
└──────────────────────┬─────────────────────────────┘
                       │
                       ▼
┌──────────────────────────────────────────────────┐
│       ENCODE TRANSFORM INFORMATION INCLUDING       │──── S420
│    INFORMATION ON NON-SEPARABLE PRIMARY TRANSFORM  │
└──────────────────────┬─────────────────────────────┘
                       │
                       ▼
┌──────────────────────────────────────────────────┐
│     GENERATE TRANSFORM COEFFICIENT BY TRANSFORMING │──── S430
│     RESIDUAL BLOCK BASED ON TRANSFORM INFORMATION  │
└──────────────────────┬─────────────────────────────┘
                       │
                       ▼
                  ┌─────────┐
                  │   END   │
                  └─────────┘
```

FIG. 5

```
                    ┌─────────┐
                    │  START  │
                    └─────────┘
                         │
                         ▼
  ┌──────────────────────────────────────────────┐
  │   OBTAIN TRANSFORM INFORMATION INCLUDING      │
  │ INFORMATION ON NON-SEPARABLE PRIMARY TRANSFORM │───S510
  └──────────────────────────────────────────────┘
                         │
                         ▼
  ┌──────────────────────────────────────────────┐
  │  OBTAIN TRANSFORM COEFFICIENT FOR CURRENT BLOCK │───S520
  └──────────────────────────────────────────────┘
                         │
                         ▼
  ┌──────────────────────────────────────────────┐
  │  GENERATE RESIDUAL BLOCK BY INVERSE TRANSFORMING │
  │ TRANSFORM COEFFICIENT BASED ON TRANSFORM INFORMATION │───S530
  └──────────────────────────────────────────────┘
                         │
                         ▼
                    ┌─────────┐
                    │   END   │
                    └─────────┘
```

FIG. 6

## INTERNATIONAL SEARCH REPORT

| International application No. |
| --- |
| **PCT/KR2023/015738** |

| A. | CLASSIFICATION OF SUBJECT MATTER |
| --- | --- |

**H04N 19/60**(2014.01)i; **H04N 19/18**(2014.01)i; **H04N 19/70**(2014.01)i; **H04N 19/176**(2014.01)i; **H04N 19/124**(2014.01)i; **H04N 19/157**(2014.01)i

According to International Patent Classification (IPC) or to both national classification and IPC

| B. | FIELDS SEARCHED |
| --- | --- |

Minimum documentation searched (classification system followed by classification symbols)

H04N 19/60(2014.01); H04N 19/11(2014.01); H04N 19/12(2014.01); H04N 19/176(2014.01); H04N 19/61(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 비분리 1차 변환(non-separable primary transform, NSPT), 변환 정보(transform information), 변환 계수(transform coefficient), 커널 인덱스(kernel index), 분리 변환(separable transform), 플래그(flag), 스킵 (skip)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2022-0122783 A (LG ELECTRONICS INC.) 02 September 2022 (2022-09-02) See paragraphs [0082], [0108], [0117] and [0250]; and claims 1 and 13. | 1,3-4,6-14 |
| A | | 2,5 |
| Y | KR 10-2022-0047725 A (INTERDIGITAL VC HOLDINGS, INC.) 19 April 2022 (2022-04-19) See claims 3, 5 and 10. | 1,3-4,6-14 |
| Y | KR 10-2022-0006062 A (BEIJING BYTEDANCE NETWORK TECHNOLOGY CO., LTD. et al.) 14 January 2022 (2022-01-14) See claims 25-26 and 40-41. | 7-10 |
| A | KR 10-2020-0138804 A (FRAUNHOFER-GESELLSCHAFT ZUR FÖRDERUNG DER ANGEWANDTEN FORSCHUNG E. V.) 10 December 2020 (2020-12-10) See paragraphs [0015]-[0016]. | 1-14 |

[✓] Further documents are listed in the continuation of Box C.  [✓] See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **23 January 2024** | **23 January 2024** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/015738**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2022-0070503 A (LG ELECTRONICS INC.) 31 May 2022 (2022-05-31)<br>See paragraph [0054]. | 1-14 |

Form PCT/ISA/210 (second sheet) (July 2022)

**INTERNATIONAL SEARCH REPORT**
Information on patent family members

International application No.

**PCT/KR2023/015738**

| Patent document cited in search report | | | Publication date (day/month/year) | Patent family member(s) | | | Publication date (day/month/year) |
|---|---|---|---|---|---|---|---|
| KR | 10-2022-0122783 | A | 02 September 2022 | CN | 113853797 | A | 28 December 2021 |
| | | | | EP | 3955578 | A1 | 16 February 2022 |
| | | | | EP | 3955578 | A4 | 29 June 2022 |
| | | | | JP | 2023-175022 | A | 08 December 2023 |
| | | | | JP | 7197728 | B2 | 27 December 2022 |
| | | | | JP | 7375152 | B2 | 07 November 2023 |
| | | | | KR | 10-2436368 | B1 | 25 August 2022 |
| | | | | US | 11831918 | B2 | 28 November 2023 |
| | | | | WO | 2020-213946 | A1 | 22 October 2020 |
| KR | 10-2022-0047725 | A | 19 April 2022 | CA | 3141992 | A1 | 03 December 2020 |
| | | | | CN | 113950834 | A | 18 January 2022 |
| | | | | EP | 3977732 | A1 | 06 April 2022 |
| | | | | JP | 2022-534999 | A | 04 August 2022 |
| | | | | US | 2022-0312040 | A1 | 29 September 2022 |
| | | | | WO | 2020-243258 | A1 | 03 December 2020 |
| KR | 10-2022-0006062 | A | 14 January 2022 | CN | 113841409 | A | 24 December 2021 |
| | | | | CN | 113841409 | B | 19 December 2023 |
| | | | | EP | 3949397 | A1 | 09 February 2022 |
| | | | | EP | 3949397 | A4 | 04 January 2023 |
| | | | | JP | 2023-093655 | A | 04 July 2023 |
| | | | | JP | 7269373 | B2 | 08 May 2023 |
| | | | | KR | 10-2022-0006059 | A | 14 January 2022 |
| | | | | US | 11622131 | B2 | 04 April 2023 |
| | | | | US | 2022-0417529 | A1 | 29 December 2022 |
| | | | | WO | 2020-228672 | A1 | 19 November 2020 |
| | | | | WO | 2020-228673 | A1 | 19 November 2020 |
| KR | 10-2020-0138804 | A | 10 December 2020 | CN | 112567745 | A | 26 March 2021 |
| | | | | EP | 3777165 | A1 | 17 February 2021 |
| | | | | JP | 2021-519546 | A | 10 August 2021 |
| | | | | JP | 2023-062181 | A | 02 May 2023 |
| | | | | US | 2021-0084301 | A1 | 18 March 2021 |
| | | | | WO | 2019-185883 | A1 | 03 October 2019 |
| KR | 10-2022-0070503 | A | 31 May 2022 | AU | 2022-375518 | A1 | 16 June 2022 |
| | | | | CN | 114731439 | A | 08 July 2022 |
| | | | | US | 2022-0385912 | A1 | 01 December 2022 |
| | | | | WO | 2021-086149 | A1 | 06 May 2021 |

Form PCT/ISA/210 (patent family annex) (July 2022)